# DEMANDE DE BREVET EUROPEEN

(11) **EP 4 417 939 A1**
(43) Date de publication de la demande: **21.08.2024**
(21) Numéro de dépôt: 24157516.6
(22) Date de dépôt: 14.02.2024
(51) Int. Cl.: G01C 21/20, G08G 5/00, G06Q 10/047, G06Q 10/0631, G06Q 50/40

(54) **PROCÉDÉ POUR FOURNIR UN PLAN DE VOL D'AÉRONEF**

(30) Priorité: 20.02.2023 FR 2301541
(71) Demandeur: Airbus Operations (S.A.S.), 31060 Toulouse Cedex 9 (FR)
(72) Inventeur: BUISSON, Alexandre, 31060 TOULOUSE (FR); PARISOT, Gilles, 31060 TOULOUSE (FR); HUYNH, Daniel, 31060 TOULOUSE (FR)
(74) Mandataire: Cabinet Le Guen Maillet

(57) **Abrégé**

Un procédé d'établissement de plan de vol pour un aéronef comporte : déterminer (106) un facteur de correction F1 lié à une dégradation de performance de l'aéronef ; utiliser (110), pour établir le plan de vol, une modélisation de l'aéronef qui intègre une valeur de pouvoir calorifique d'un carburant de référence ; obtenir (107) un facteur de correction F2 lié à une différence de pouvoir calorifique entre le carburant de référence et un carburant destiné à être utilisé pour suivre le plan de vol ; modifier (109) le facteur de correction F1 par ajout du facteur de correction F2 ; et déterminer (113) le plan de vol en utilisant la modélisation de l'aéronef, à laquelle est donné en entrée le facteur de correction F1 modifié. Ainsi, il est possible d'utiliser une modélisation d'aéronef dont la valeur de pouvoir calorifique est figée en interne.

## Description

### DOMAINE TECHNIQUE

La présente invention concerne une fourniture de plan de vol pour un aéronef, le plan de vol tenant compte d'un facteur de correction lié au pouvoir calorifique d'un carburant destiné à être utilisé par l'aéronef pour suivre le plan de vol.

### ETAT DE LA TECHNIQUE ANTERIEURE

Un paramètre pris en compte pour établir et/ou analyser un plan de vol est le pouvoir calorifique du carburant, afin de permettre de déterminer quelle distance tel ou tel aéronef va pouvoir parcourir suivant une quantité de carburant embarqué.

Pour pouvoir déterminer cette distance, des outils d'établissement de plan de vol existent, et ces outils utilisent des modélisations d'aéronefs qui prennent en entrée un facteur de correction lié à une dégradation de performance des aéronefs au long de leurs vies. Ces outils utilisent aussi une valeur de pouvoir calorique de carburant FLHV (« Fuel Lower Heating Value » en anglais) par défaut, propre à des propriétés réglementaires du carburant Jet-A1, qui est le carburant actuellement utilisé pour la grande majorité des vols.

Dans les outils d'établissement de plan de vol, la valeur de pouvoir calorifique du carburant est figée pour correspondre aux propriétés réglementaires du carburant Jet-A1, et ne peut être modifiée sans recourir à une reprogrammation desdits outils.

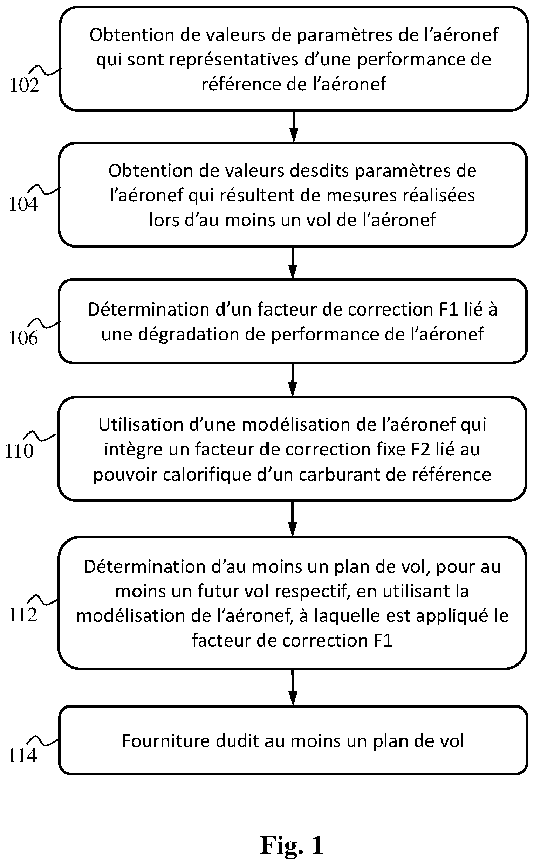

Ainsi, comme schématiquement illustré sur la Fig. 1, un procédé connu d'établissement d'un ou plusieurs plans de vol pour un aéronef comporte :
- une étape 102 d'obtention de premières valeurs de paramètres de l'aéronef qui sont représentatives d'une performance de référence de l'aéronef ;
- une étape 104 d'obtention de deuxièmes valeurs desdits paramètres de l'aéronef qui résultent de mesures réalisées lors d'au moins un vol de l'aéronef ;
- une étape 106 de détermination d'un facteur de correction F1 lié à une dégradation de performance de l'aéronef, par comparaison desdites deuxièmes valeurs avec lesdites premières valeurs ;
- une étape 110 d'utilisation d'une modélisation de l'aéronef qui intègre une valeur de pouvoir calorifique d'un carburant de référence ;
- une étape 112 de détermination d'au moins un plan de vol, pour au moins un futur vol respectif, en utilisant la modélisation de l'aéronef, à laquelle est donnée en entrée le facteur de correction F1 ; et
- une étape 114 de fourniture dudit au moins un plan de vol.

La modélisation de l'aéronef repose sur la performance de référence de l'aéronef, typiquement la performance de l'aéronef lors de sa mise en service EIS (« Entry Into Service » en anglais), pour laquelle est appliqué, d'une part, la valeur de pouvoir calorifique du carburant de référence, et d'autre part, le facteur de correction F1 lié à la dégradation de performance de l'aéronef au fil du temps. Ainsi, un plan de vol est fourni de manière adaptée aux performances réelles de l'aéronef utilisant le carburant de référence Jet-A1.

Il est connu du document US2021/0383706 un système et une méthode pour améliorer la planification des vols des aéronefs. Toutefois, ce système et cette méthode ne permettent pas de prendre en compte une modification du pouvoir calorifique du carburant.

Il est connu du document US2019/0112067 un ajustement de la consommation de carburant pour un vol d'un aéronef sur la base d'une mesure du pouvoir calorifique du carburant pour ledit vol de l'aéronef. Des capteurs de température et de densité du carburant, disposés dans chaque aéronef, sont configurés pour acquérir des mesures de température et de densité du carburant présent dans les réservoirs de stockage de carburant desdits aéronefs. De ces mesures de température et de densité du carburant est estimé un pouvoir calorifique ajusté du carburant pour ledit vol de l'aéronef.

Cependant, de nouveaux carburants apparaissent, par exemple des carburants durables d'aviation SAF (« Sustainable Aviation Fuel » en anglais), et ces nouveaux carburants peuvent avoir une variation non négligeable de leur pouvoir calorifique, à savoir beaucoup plus importante que le carburant de référence Jet-A1.

Il doit alors être envisagé d'effectuer une mise à jour de toutes les modélisations d'aéronefs des outils d'établissement de plan de vol, afin de permettre que le pouvoir calorifique du carburant soit une donnée d'entrée de ces modélisations et ne soit donc plus un paramètre interne figé.

Cependant, un déploiement d'une telle mise à jour est fastidieux et les outils d'établissement de plan de vol pourraient perdre en précision le temps que ce déploiement soit opéré. Il est donc souhaitable de fournir une solution qui permette de prendre en compte la variabilité de pouvoir calorifique de ces nouveaux carburants dans l'aviation sans avoir à modifier les modélisations d'aéronefs sur lesquelles reposent lesdits outils d'établissement de plan de vol.

### EXPOSE DE L'INVENTION

Il est ainsi proposé ici un procédé d'établissement de plan de vol pour un aéronef, le procédé étant exécuté par un système informatisé, le procédé comportant : obtenir des premières valeurs de paramètres de l'aéronef qui sont représentatives d'une performance de référence de l'aéronef ; obtenir des deuxièmes valeurs desdits paramètres de l'aéronef qui résultent de mesures réalisées lors d'au moins un vol de l'aéronef ; déterminer un facteur de correction F1 lié à une dégradation de performance de l'aéronef, par comparaison desdites deuxièmes valeurs avec lesdites premières valeurs ; utiliser, pour établir le plan de vol, une modélisation de l'aéronef qui intègre une valeur de pouvoir calorifique d'un carburant de référence. Le procédé comporte aussi : obtenir un facteur de correction F2 lié à une différence de pouvoir calorifique entre le carburant de référence et un carburant destiné à être utilisé par l'aéronef pour suivre le plan de vol ; modifier le facteur de correction F1 par ajout du facteur de correction F2 ; et déterminer le plan de vol en utilisant la modélisation de l'aéronef, à laquelle est donnée en entrée le facteur de correction F1 modifié.

Ainsi, en utilisant en entrée de la modélisation d'aéronef un facteur de correction F1 lié à une dégradation de performance de l'aéronef qui est ajusté grâce à un facteur de correction F2 lié à ladite différence de pouvoir calorifique, il est possible d'utiliser une dite modélisation d'aéronef dont la valeur de pouvoir calorifique est fixe en interne. De plus, pour prendre en compte une variabilité non négligeable de pouvoir calorifique de carburant, il n'est pas nécessaire de redévelopper et redéployer la modélisation d'aéronef dans des outils d'établissement de plan de vol déjà existants.

Selon l'invention, les facteurs de correction F1 et F2 sont des facteurs de correction de consommation de carburant.

Selon l'invention, le procédé comporte en outre : transmettre le plan de vol à un système d'affichage électronique de vol destiné à être utilisé pendant un vol de l'aéronef en suivant le plan de vol, le plan de vol étant accompagné du facteur de correction F1 modifié.

Il est également proposé ici un programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus, lorsque ledit programme est exécuté par le processeur. Il est aussi proposé ici un support non-transitoire de stockage d'informations stockant un tel programme d'ordinateur.

Selon l'invention, le procédé comporte en outre l'étape suivante effectuée par le système d'affichage électronique de vol : transmettre à une avionique de l'aéronef, pour effectuer le vol en question, le facteur de correction F1 modifié, afin de configurer un système de gestion de vol de l'avionique.

Selon l'invention, le procédé comporte en outre l'étape suivante effectuée par l'avionique : transmettre, une fois le vol effectué, un rapport contenant des informations de mesures réalisées lors dudit vol vis-à-vis desdits paramètres. De plus, le procédé comporte en outre l'étape suivante effectuée par le système informatisé : stocker en base de données lesdites informations de mesures accompagnées du facteur de correction F1 modifié ou du facteur de correction F2, afin de déterminer le facteur de correction F1 pour au moins un vol ultérieur de l'aéronef.

Il est aussi proposé ici un système informatisé comportant de la circuiterie électronique configurée pour établir un plan de vol pour un aéronef et configurée pour : obtenir des premières valeurs de paramètres de l'aéronef qui sont représentatives d'une performance de référence de l'aéronef ; obtenir des deuxièmes valeurs desdits paramètres de l'aéronef qui résultent de mesures réalisées lors d'au moins un vol de l'aéronef ; déterminer un facteur de correction F 1 lié à une dégradation de performance de l'aéronef, par comparaison desdites deuxièmes valeurs avec lesdites premières valeurs ; utiliser, pour établir le plan de vol, une modélisation de l'aéronef qui intègre une valeur de pouvoir calorifique d'un carburant de référence. La circuiterie électronique est aussi configurée pour : obtenir un facteur de correction F2 lié à une différence de pouvoir calorifique entre le carburant de référence et un carburant destiné à être utilisé par l'aéronef pour suivre le plan de vol ; modifier le facteur de correction F1 par ajout du facteur de correction F2 ; et déterminer le plan de vol en utilisant la modélisation de l'aéronef, à laquelle est donné en entrée le facteur de correction F1 modifié.

Selon l'invention, la circuiterie électronique est également configurée pour transmettre le plan de vol à un système d'affichage électronique de vol destiné à être utilisé pendant un vol de l'aéronef en suivant le plan de vol, le plan de vol étant accompagné du facteur de correction F1 modifié et pour stocker en base de données des informations de mesures, reçues d'une avionique de l'aéronef, réalisées lors dudit vol vis-à-vis desdits paramètres accompagnées du facteur de correction F1 modifié ou du facteur de correction F2, afin de déterminer le facteur de correction F1 pour au moins un vol ultérieur de l'aéronef.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un algorithme de fourniture de plan de vol pour un aéronef, connu de l'état de la technique ;
[Fig. 2] illustre schématiquement un algorithme de fourniture de plan de vol pour un aéronef, dans un mode de réalisation particulier de la présente invention ;
[Fig. 3] illustre schématiquement un parcours de données entre différentes entités impliquées dans un établissement de plan de vol et un partage de ce plan de vol ;
[Fig. 4] illustre schématiquement un agencement pour utiliser une modélisation d'aéronef dans le cadre d'un établissement de plan de vol ;
[Fig. 5] illustre schématiquement un exemple de plateforme matérielle permettant d'implémenter, sous forme de circuiterie électronique ; et
[Fig. 6] illustre schématiquement un aéronef.

### EXPOSE DETAILLE DE MODES DE REALISATION

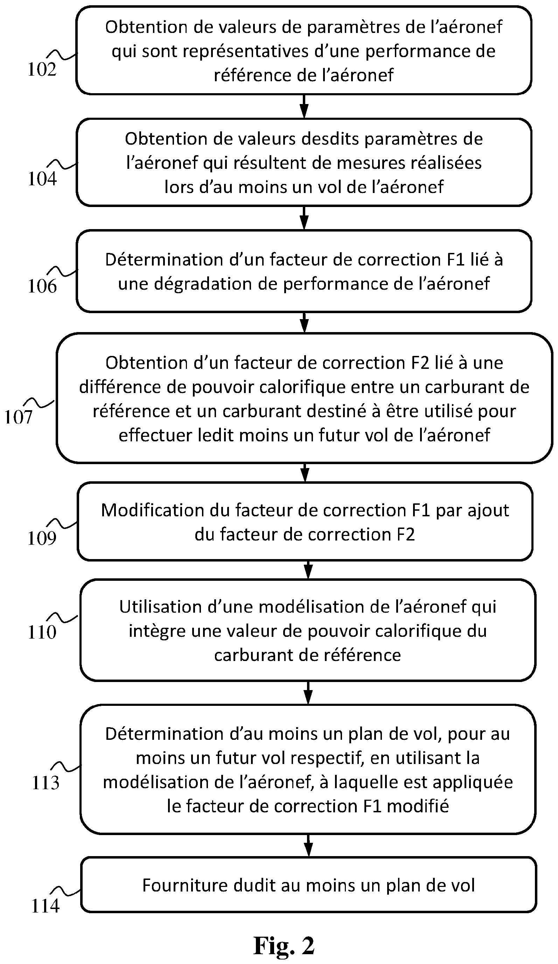

La **Fig. 2** illustre ainsi schématiquement un algorithme de fourniture de plan de vol pour un aéronef, dans un mode de réalisation particulier de la présente invention. L'algorithme de la Fig. 2 apporte des modifications par rapport à l'algorithme de la Fig. 1 déjà présenté ci-dessus.

L'algorithme de la Fig. 2 est exécuté par un système comportant de la circuiterie électronique, tel qu'un système informatique.

Les étapes 102, 104 et 106 sont reprises de l'algorithme de la Fig. 1 et ne sont donc pas plus amplement décrites ici.

L'algorithme de la Fig. 2 comporte une étape 107 d'obtention d'un facteur de correction F2 lié à une différence de pouvoir calorifique entre un carburant de référence et un carburant destiné à être utilisé pour effectuer au moins un futur vol de l'aéronef. Le carburant de référence est un carburant de caractéristiques moyennes des carburants Jet-A1 utilisés dans l'aviation.

Le carburant de référence est celui dont le pouvoir calorifique est figé dans une modélisation de l'aéronef qui est utilisée, dans l'étape 110, afin d'établir le plan de vol.

L'étape 107 peut être effectuée avant l'étape 106, ou en parallèle de l'étape 106.

Suite aux étapes 106 et 107, l'algorithme de la Fig. 2 comporte une étape 109 de modification du facteur de correction F1 par ajout du facteur de correction F2.

Dans un mode de réalisation préféré, les facteurs de correction F1 et F2 sont des facteurs de correction de consommation de carburant. Dans ce cadre, il convient de noter que le facteur de correction F2 a une valeur signée et donc que le facteur de correction F1 est modifié aussi.

Par exemple, il est établi que, dû à un vieillissement moteur, la performance de l'aéronef a diminué de 3% par rapport à son entrée en service. Le facteur de correction F1 serait donc égal à 3% correspondant à une surconsommation de carburant de 3% par exemple. Le facteur de correction F1 peut aussi être exprimé sous la forme d'un coefficient de consommation de carburant alors égal à 1,03 (où une valeur égale à 1 équivaut à une consommation de l'aéronef en sortie d'usine). Si, dans cet exemple, il est en outre établi que le pouvoir calorifique du carburant destiné à être utilisé pour ledit au moins un futur vol de l'aéronef implique une surconsommation de carburant de 1% par rapport au carburant de référence, alors le facteur de correction F2 serait égal à 1%, ce qui donnerait un facteur de correction F1 modifié de 4% à l'issue de l'étape 109 ; alors que si le pouvoir calorifique du carburant destiné à être utilisé pour ledit au moins un futur vol de l'aéronef implique une amélioration de consommation de carburant de 1% par rapport au carburant de référence (un pouvoir calorifique plus élevé entraîne une augmentation de la distance parcourue par unité de carburant), alors le facteur de correction F2 serait donc égal à -1%, ce qui donnerait un facteur de correction F1 modifié de 2% à l'issue de l'étape 109.

Ce facteur de correction F1 modifié à l'étape 109 est alors utilisé en entrée à l'étape 110. En ajustant le facteur de correction F1 lié à la dégradation de performance de l'aéronef pour tenir compte de la différence de pouvoir calorifique entre le carburant de référence et le carburant destiné à être utilisé pour effectuer au moins un futur vol de l'aéronef, il est possible d'établir un plan de vol précis en utilisant une modélisation d' aéronef dont la valeur de pouvoir calorifique du carburant (de référence) est figée en interne.

Alors, une étape 113 (qui est une version modifiée de l'étape 112 de l'algorithme de la Fig. 1) est effectuée, l'étape 113 étant une étape de détermination d'au moins un plan de vol, pour ledit au moins un futur vol respectif, en utilisant la modélisation de l'aéronef en question, à laquelle est donné en entrée le facteur de correction F1 modifié, c'est-à-dire avec prise en compte du facteur de correction F2, et non le facteur de correction F1 simplement issu de l'étape 106.

Ensuite, l'étape 114 est effectuée.

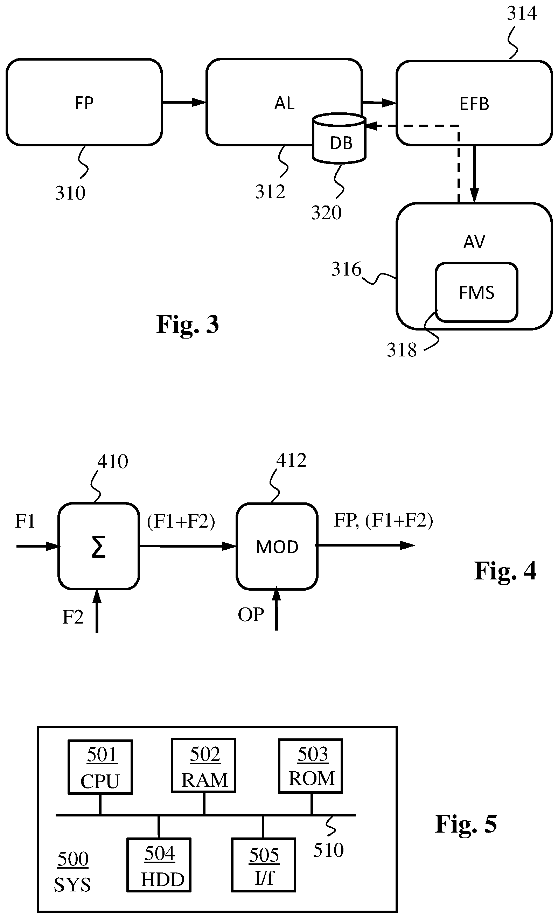

La **Fig. 3** illustre schématiquement un parcours de données entre différentes entités impliquées dans un établissement de plan de vol et un partage de ce plan de vol.

Un système informatisé 310 d'un fournisseur de carburant FP (« Fuel Provider » en anglais) transmet une information, relative au pouvoir calorifique de carburant fourni, à un système informatisé 312 d'une compagnie aérienne AL (« AirLine » en anglais). Par exemple, l'information en question est le pouvoir calorifique du carburant fourni, ce qui permet au système informatisé 312 de la compagnie aérienne AL d'en déduire le facteur de correction F2 d'après le pouvoir calorifique du carburant de référence (e.g., valeur moyenne de pouvoir calorifique du Jet-A1). L'information en question est, dans un autre exemple, directement le facteur de correction F2. Ce facteur de correction F2 est donc prédéfini, ou déduit d'une information prédéfinie, en fonction du type de carburant fourni, et n'est pas estimé ou calculé individuellement pour chaque vol d'aéronef (ce qui allongerait les temps de modélisation du plan de vol et nécessiterait des capteurs et/ou des moyens de calcul spécifiques pour chaque aéronef).

Le système informatisé 312 de la compagnie aérienne AL comporte une base de données DB (« DataBase » en anglais) 320. La base de données DB 320 est utilisée pour stocker des mesures réalisées lors de vols d'aéronefs de la compagnie aérienne AL. Ces mesures correspondent à des paramètres permettant d'estimer la performance des aéronefs lors des vols en question (deuxièmes valeurs dans l'algorithme des Figs. 1 et 2). Par comparaison avec des valeurs de référence (premières valeurs dans l'algorithme des Figs. 1 et 2), le système informatisé 312 de la compagnie aérienne AL peut déterminer le facteur de correction F1 applicable pour tel ou tel aéronef.

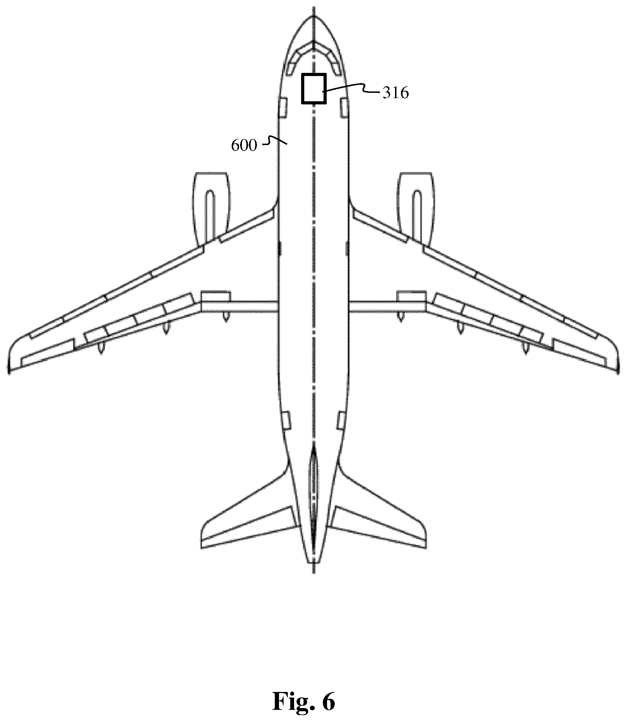

Le système informatisé 312 de la compagnie aérienne AL établit le plan de vol, selon le procédé décrit en relation avec la Fig. 2, et transmet des informations relatives au plan de vol à un équipement électronique portable à la disposition du pilote, tel qu'un système d'affichage électronique de vol, communément appelé EFB (« Electronic Flight Bag » en anglais, ou parfois aussi « sacoche de vol électronique ») 314. Ces systèmes d'affichage électronique de vol EFB prennent généralement la forme de tablettes électroniques tactiles et contiennent typiquement des données de mission de vol, ainsi que les applications pour les exploiter, ou les mettre à jour, durant le vol. Le système d'affichage électronique de vol EFB 314 sert d'intermédiaire entre le système informatisé 312 de la compagnie aérienne AL et une avionique AV 316 de l'aéronef. L'avionique 316 est schématiquement aussi illustrée sur la **Fig. 6****,** où est représenté en vue de dessus un aéronef 600.

Ainsi, grâce à des communications filaires (par exemple, de type USB (« Universal Serial Bus » en anglais)) ou sans-fil (par exemple, de type Bluetooth, Wi-Fi, 4G ou 5G)), ou autre tout type de communication, notamment sécurisée, il est possible au système informatisé 312 de la compagnie aérienne AL de transmettre au système d'affichage électronique de vol EFB 314 les informations relatives au plan de vol. Ensuite, grâce à des communications filaires (par exemple, de type USB) ou sans-fil (par exemple, de type Bluetooth ou Wi-Fi), ou tout autre type de communication, (notamment sécurisée), il est possible au système d'affichage électronique de vol EFB 314 de transmettre à l'avionique AV 316 les informations relatives au plan de vol. Les informations relatives au plan de vol incluent le facteur de correction F1 modifié, à savoir la somme des facteurs de correction F1 et F2. Un système de gestion de vol FMS (« Flight Management System » en anglais) 318 peut ainsi être programmé en tenant compte du pouvoir calorifique réel du carburant utilisé pour le vol.

En variante, il est possible que les informations relatives au plan de vol, incluant le facteur de correction F1 modifié, soient saisies par le pilote via une interface homme-machine de l'avionique AV 316.

Une fois le vol effectué, des informations de mesures réalisées lors du vol vis-à-vis de paramètres de l'aéronef utiles pour déterminer la performance de l'aéronef, et donc l'éventuelle dégradation de performance de l'aéronef, peuvent être transmises depuis l'avionique AV 316 vers le système informatisé 312 de la compagnie aérienne AL, en utilisant par exemple à nouveau le système d'affichage électronique de vol EFB 314 comme intermédiaire. Par exemple, les informations de mesures sont regroupées dans un rapport (appelé « Cruise Report No.2 ») généré par un système de surveillance de conditions d'aéronef ACMS (« Aircraft Condition Monitoring System » en anglais) de l'avionique 316, et transmis au système informatisé 312 de la compagnie aérienne AL afin d'enrichir les mesures stockées dans la base de données DB 320 afin de déterminer le facteur de correction F1 pour au moins un vol ultérieur de l'aéronef. Dans ce mode de réalisation particulier, le facteur de correction F1 modifié accompagne les informations de mesures en question dans la base de données DB 320. Cela permet, en stockant aussi le facteur de correction F1 (non modifié), de connaître l'impact du pouvoir calorifique du carburant, et d'effectuer une analyse de performance après vol qui soit précise, en tenant compte des propriétés réelles du carburant utilisé pour ne pas biaiser une estimation d'éventuelle dégradation de performance de l'aéronef. En variante, le facteur de correction F2 accompagne les informations de mesures en question dans la base de données DB 320.

La **Fig. 4** illustre schématiquement un agencement pour utiliser une modélisation d'aéronef MOD 412 dans le cadre d'un établissement de plan de vol. Dans le cadre de la Fig. 3, l'agencement en question est inclus dans le système informatisé 312 de la compagnie aérienne AL.

Les facteurs de correction F1 et F2 sont injectés en entrée d'un sommateur ∑ 410, qui délivre en sortie le facteur de correction F1 modifié (correspondant donc à la somme des facteurs de correction F1 et F2). Le facteur de correction F1 modifié est injecté en entrée de la modélisation d'aéronef MOD 412, ainsi que d'autres paramètres OP utiles à l'établissement du plan de vol. La modélisation d'aéronef MOD 412 intègre, de manière figée, la valeur de pouvoir calorifique du carburant de référence.

La modélisation d'aéronef MOD 412 délivre en sortie des informations de plan de vol FP, ainsi que le facteur de correction F1 modifié (qui, dans le cadre de la Fig. 3, permet une configuration du système de gestion de vol FMS 318 en accord avec le carburant effectivement utilisé pour le vol).

La **Fig. 5** illustre schématiquement un exemple de plateforme matérielle permettant d'implémenter, sous forme de circuiterie électronique, le système informatisé 312 de la compagnie aérienne AL.

La plateforme matérielle comporte alors, reliés par un bus de communication 410 : un processeur ou CPU (« Central Processing Unit » en anglais) 501 ; une mémoire vive RAM (« Read Access Memory » en anglais) 502 ; une mémoire morte 503, par exemple de type ROM (« Read Only Memory » en anglais) ou EEPROM (« Electrically-Erasable Programmable ROM » en anglais) ou de type Flash ; une unité de stockage, telle qu'un disque dur HDD (« Hard Disk Drive » en anglais) 504, ou un lecteur de support de stockage, tel qu'un lecteur de cartes SD (« Secure Digital » en anglais) ; et un gestionnaire d'interfaces I/f 505.

Le gestionnaire d'interfaces I/f 505 permet au système informatisé 312 de la compagnie aérienne AL d'interagir avec un ou plusieurs équipements ou autres systèmes informatisés, plus particulièrement le système informatisé 310 du fournisseur de carburant FP et le système d'affichage électronique de vol EFB 314.

Le processeur 501 est capable d'exécuter des instructions chargées dans la mémoire vive 502 à partir de la mémoire morte 503, d'une mémoire externe, d'un support de stockage (tel qu'une carte SD), ou d'un réseau de communication. Lorsque la plateforme matérielle est mise sous tension, le processeur 501 est capable de lire de la mémoire vive 502 des instructions et de les exécuter. Ces instructions forment un programme d'ordinateur causant l'implémentation, par le processeur 501, de tout ou partie des étapes et fonctionnements décrits ici.

Tout ou partie des étapes et fonctionnements décrits ici peut ainsi être implémenté sous forme logicielle par exécution d'un ensemble d'instructions par une machine programmable, par exemple un processeur de type DSP (« Digital Signal Processor » en anglais) ou un microcontrôleur, ou être implémenté sous forme matérielle par une machine ou un composant électronique (« chip » en anglais) dédié ou un ensemble de composants électroniques (« chipset » en anglais) dédié, par exemple un composant FPGA (« Field Programmable Gate Array » en anglais) ou ASIC (« Application Specific Integrated Circuit » en anglais). D'une manière générale, le système informatisé 312 de la compagnie aérienne AL comporte de la circuiterie électronique adaptée et configurée pour implémenter les fonctionnements et étapes décrits ici.

## Revendications

1. Procédé d'établissement de plan de vol pour un aéronef, le procédé étant exécuté par un système informatisé (312), le procédé comportant :
- obtenir (102) des premières valeurs de paramètres de l'aéronef qui sont représentatives d'une performance de référence de l'aéronef ;
- obtenir (104) des deuxièmes valeurs desdits paramètres de l'aéronef qui résultent de mesures réalisées lors d'au moins un vol de l'aéronef ;
- déterminer (106) un facteur de correction F1 lié à une dégradation de performance de l'aéronef, le facteur de correction F1 étant un facteur de correction de consommation de carburant, par comparaison desdites deuxièmes valeurs avec lesdites premières valeurs ;
- utiliser (110), pour établir le plan de vol, une modélisation de l'aéronef qui intègre une valeur de pouvoir calorifique d'un carburant de référence ;
le procédé étant **caractérisé en ce qu'**il comporte :
- obtenir (107) un facteur de correction F2 lié à une différence de pouvoir calorifique entre le carburant de référence et un carburant destiné à être utilisé par l'aéronef pour suivre le plan de vol, le facteur de correction F2 étant un facteur de correction de consommation de carburant ;
- modifier (109) le facteur de correction F1 par ajout du facteur de correction F2 ;
- déterminer (113) le plan de vol en utilisant la modélisation de l'aéronef, à laquelle est donné en entrée le facteur de correction F1 modifié;
- transmettre le plan de vol à un système d'affichage électronique de vol destiné à être utilisé pendant un vol de l'aéronef en suivant le plan de vol, le plan de vol étant accompagné du facteur de correction F1 modifié;
le procédé comportant en outre l'étape suivante effectuée par le système d'affichage électronique de vol (314) :
- transmettre à une avionique (316) de l'aéronef, pour effectuer le vol en question, le facteur de correction F1 modifié, afin de configurer un système de gestion de vol (318) de l'avionique (316);
le procédé comportant en outre l'étape suivante effectuée par l'avionique (316) :
- transmettre, une fois le vol effectué, un rapport contenant des informations de mesures réalisées lors dudit vol vis-à-vis desdits paramètres ;
et le procédé comportant en outre l'étape suivante effectuée par le système informatisé (312) :
- stocker en base de données (320) lesdites informations de mesures accompagnées du facteur de correction F1 modifié ou du facteur de correction F2, afin de déterminer le facteur de correction F1 pour au moins un vol ultérieur de l'aéronef.

2. Produit programme d'ordinateur comportant des instructions causant une implémentation du procédé selon la revendication 1, lorsque les instructions sont exécutées par un processeur de système informatisé (312).

3. Support de stockage stockant des instructions causant une implémentation du procédé selon la revendication 1, lorsque les instructions sont lues depuis le support de stockage et exécutées par un processeur de système informatisé (312).

4. Système informatisé (312) comportant de la circuiterie électronique configurée pour établir un plan de vol pour un aéronef et configurée pour :
- obtenir (102) des premières valeurs de paramètres de l'aéronef qui sont représentatives d'une performance de référence de l'aéronef ;
- obtenir (104) des deuxièmes valeurs desdits paramètres de l'aéronef qui résultent de mesures réalisées lors d'au moins un vol de l'aéronef ;
- déterminer (106) un facteur de correction F1 lié à une dégradation de performance de l'aéronef, le facteur de correction F1 étant un facteur de correction de consommation de carburant, par comparaison desdites deuxièmes valeurs avec lesdites premières valeurs ;
- utiliser (110), pour établir le plan de vol, une modélisation de l'aéronef qui intègre une valeur de pouvoir calorifique d'un carburant de référence ;
la circuiterie électronique étant **caractérisée en ce qu'**elle est configurée pour :
- obtenir (107) un facteur de correction F2 lié à une différence de pouvoir calorifique entre le carburant de référence et un carburant destiné à être utilisé par l'aéronef pour suivre le plan de vol, le facteur de correction F2 étant un facteur de correction de consommation de carburant ;
- modifier (109) le facteur de correction F1 par ajout du facteur de correction F2 ;
- déterminer (113) le plan de vol en utilisant la modélisation de l'aéronef, à laquelle est donné en entrée le facteur de correction F1 modifié ;
- transmettre le plan de vol à un système d'affichage électronique de vol destiné à être utilisé pendant un vol de l'aéronef en suivant le plan de vol, le plan de vol étant accompagné du facteur de correction F1 modifié ; et
- stocker en base de données (320) des informations de mesures, reçues d'une avionique (316) de l'aéronef, réalisées lors dudit vol vis-à-vis desdits paramètres accompagnées du facteur de correction F1 modifié ou du facteur de correction F2, afin de déterminer le facteur de correction F1 pour au moins un vol ultérieur de l'aéronef.
